Europäisches Patentamt

European Patent Office

Office européen des brevets

(19)

(11) **EP 1 259 005 A1**

(12) **EUROPÄISCHE PATENTANMELDUNG**

(43) Veröffentlichungstag:
   **20.11.2002   Patentblatt 2002/47**

(51) Int Cl.[7]: **H04B 1/707**

(21) Anmeldenummer: **01112282.7**

(22) Anmeldetag: **18.05.2001**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(71) Anmelder: **SIEMENS AKTIENGESELLSCHAFT 80333 München (DE)**

(72) Erfinder:
   • **Seeger, Alexander 85622 Feldkirchen (DE)**
   • **Vogl, Ulrich, Prof. 92263 Ebermannsdorf (DE)**

(54) **Empfangseinrichtung für ein CDMA-Nachrichtenübertragungssystem, sowie adaptives CDMA-Interferenzunterdrückungsverfahren**

(57)   Die Erfindung betrifft ein adaptives CDMA-Interferenzunterdrückungsverfahren, sowie eine Empfangseinrichtung (4) für ein CDMA-Nachrichtenübertragungssystem (1), welche einen ersten Rake-Empfänger (5) aufweist, welcher aus von mehreren verschiedenen Sendeeinheiten (2, 3) gemeinsam empfangenen Signalen ein einer ersten Sendeeinheit (2) zugeordnetes Signal ($r_1(k)$) herausfiltert, einen zweiten Rake-Empfänger (6), welcher aus den von den mehreren verschiedenen Sendeeinheiten (2, 3) gemeinsam empfangenen Signalen ein einer zweiten Sendeeinheit (3) zugeordnetes Signal ($r_2(k)$) herausfiltert, und eine adaptive Interferenzunterdrückungseinrichtung (10), welche in dem der ersten Sendeeinheit (2) zugeordneten, herausgefilterten Signal ($r_1(k)$ enthaltene Interferenzen unterdrückt, wobei die Interferenzunterdrückungseinrichtung (10) eine "soft-bit" Entscheidungseinrichtung (9) enthält, welcher als Eingabesignal das der zweiten Sendeeinheit (3) zugeordnete, herausgefilterte Signal ($r_2(k)$) zugeführt wird, und deren Ausgabesignal ($x_2(k)$) zur Berechnung von in dem der ersten Sendeeinheit (2) zugeordneten, herausgefilterten Signal ($r_1k$) enthaltenen Interferenzen verwendet wird. Gemäß einem weiteren Aspekt der Erfindung weist die Interferenzunterdrückungseinrichtung (10) eine Mehrphasenstruktur auf, wobei die zur Interferenzunterdrückung verwendeten Filterkoeffizienten (w) in Abhängigkeit von der momentanen Phase ($\lambda$) gewählt werden, in der sich die Interferenzunterdrückungseinrichtung (10) befindet.

FIG 3

EP 1 259 005 A1

**Beschreibung**

Empfangseinrichtung für ein CDMA-Nachrichtenübertragungssystem, sowie adaptives CDMA-Interferenzunterdrückungsverfahren

Die Erfindung betrifft Empfangseinrichtungen für CDMA-Nachrichtenübertragungssysteme gemäß den Oberbegriffen der Ansprüche 1, 2 und 7, sowie adaptive CDMA-Interferenzunterdrückungsverfahren gemäß den Oberbegriffen der Ansprüche 9 und 12.

Bei der Übertragung von Nachrichten von einem Sender, z.B. einem Mobilfunk-Endgerät, an einen Empfänger, z.B. eine Mobilfunk-Basisstation hängt die über einen bestimmten Kanal übertragbare Nachrichtenmenge von der verfügbaren Bandbreite, von der verfügbaren Übertragungszeit und vom Störabstand ab. Soll ein Kanal von mehreren Sendern gleichzeitig genutzt werden, kann z.B. die verfügbare Bandbreite auf die verschiedenen Sender aufgeteilt werden ("FDMA" = frequency division multiple access). Alternativ oder zusätzlich können jedem Sender jeweils bestimmte Zeitfenster auf der Zeitachse zugeordnet sein ("TDMA" = time division multiple access). Demgegenüber nutzen bei CDMA-Verfahren ("CDMA" = code division multiple access) alle Sender fortdauernd das gesamte Frequenzband. Die Trennung zwischen den Signalen einzelner Sender kann z.B. durch unterschiedliche Codes erfolgen.

Bei W-CDMA-Mobilfunksystemen ("W-CDMA" = wideband code division multiple access), beispielsweise bei UMTS-Mobilfunksystemen, kommuniziert eine Basisstation mit einer Vielzahl von mobilen Endgeräten, die sich (momentan) in einer der Basisstation zugeordneten Zelle befinden. Zum Senden von Informationen von den Endgeräten zur Basisstation (Kommunikation in "uplink"-Richtung) werden sog. Spreizcodes verwendet ("spreading codes"). Ein einzelnes zu übertragendes Datenbit wird mit Hilfe des jeweiligen Spreizcodes zu einer Chipfolge aufgespreizt. Da die verwendeten Spreizcodes zueinander nicht orthogonal sind, kommt es zu Interferenzen, z.B. zu Interferenzen mit von Endgeräten anderer Zellen ausgesendeten Signalen ("inter cell interference"), sowie zu Interferenzen zwischen den Signalen der einer bestimmten Zelle zugeordneten Endgeräten ("intra cell interference"). Hierbei kann es sich um Interferenzen eines von einem bestimmten Endgerät ausgesendeten Signals mit den von anderen Endgeräten der gleichen Basisstation ausgesendeten Signalen handeln ("multi user interference"), oder um Interferenzen zwischen von einem bestimmten Endgerät ausgesendeten, jedoch verschiedenen Datenbits zugeordneten Signalen ("inter symbol interference"). Auch orthogonale Sequenzen können aufgrund von Laufzeitunterschieden deorthogonalisiert werden, so dass auch bei orthogonalen Sequenzen Interferenzen auftreten können.

Im Stand der Technik sind Verfahren bekannt, mit denen Interferenzen zwischen den einer bestimmten Zelle zugeordneten mobilen Endgeräten unterdrückt werden können. Beispielsweise wird bei der seriellen Interferenzunterdrückung ("serial interference cancellation") zunächst in einer ersten Stufe in der Basisstation das von dem am stärksten empfangenen Endgerät stammende Datenbit-Signal ermittelt. Dann wird durch Re-Modulation die Interferenz mit den anderen Endgeräten geschätzt, und das Interferenz-Schätzsignal von den von den Endgeräten empfangenen Signalen subtrahiert. In einer zweiten Stufe wird das von dem zweitstärksten Endgerät stammende Datenbit-Signal ermittelt, und das durch Re-Modulation gewonnene Interferenz-Schätzsignal von den von den Endgeräten empfangenen Signalen subtrahiert, usw. Ein Nachteil hierbei ist unter anderem, dass die erforderlichen Signal-Remodulationen zu einem hohen Schaltungsaufwand führen. Außerdem wirken sich in den ersten Stufen gemachte Schätzfehler nachteilig auf die Bitfehlerquoten sämtlicher nachfolgender Stufen aus.

Die Erfindung hat zur Aufgabe, neuartige adaptive CDMA-Interferenzunterdrückungsverfahren, sowie neuartige Empfangseinrichtungen für CDMA-Nachrichtenübertragungssysteme zur Verfügung zu stellen.

Sie erreicht dieses und weitere Ziele gemäß einem ersten Aspekt der vorliegenden Erfindung dadurch, dass eine Empfangseinrichtung für ein CDMA-Nachrichtenübertragungssystem zur Verfügung gestellt wird, welche einen Rake-Empfänger aufweist, welcher aus von mehreren verschiedenen Sendeeinheiten gemeinsam empfangenen Signalen ein einer bestimmten Sendeeinheit zugeordnetes Signal herausfiltert, eine adaptive Interferenzunterdrückungseinrichtung, welche in dem herausgefilterten Signal enthaltene Interferenzen unterdrückt, und eine Koeffizientenaktualisiereinrichtung, die Filterkoeffizienten berechnet, die zur Interferenzunterdrückung verwendet werden, wobei die Interferenzunterdrückungseinrichtung eine Mehrphasenstruktur aufweist, und wobei die zur Interferenzunterdrückung verwendeten Filterkoeffizienten in Abhängigkeit von der momentanen Phase gewählt werden, in der sich die Interferenzunterdrückungseinrichtung befindet.

Gemäß einem zweiten Aspekt der vorliegenden Erfindung, welcher insbesondere zur Unterdrückung von "multi user interference" geeignet ist, weist eine Empfangseinrichtung für ein CDMA-Nachrichtenübertragungssystem einen ersten Rake-Empfänger auf, welcher aus von mehreren verschiedenen Sendeeinheiten gemeinsam empfangenen Signalen ein einer ersten Sendeeinheit zugeordnetes Signal herausfiltert, einen zweiten Rake-Empfänger, welcher aus den von den mehreren verschiedenen Sendeeinheiten gemeinsam empfangenen Signalen ein einer zweiten Sendeeinheit zugeordnetes Signal herausfiltert, und eine adaptive Interferenzunterdrückungseinrichtung, welche in dem der ersten Sendeeinheit zugeordneten, herausgefilterten Signal enthaltene Interferenzen unterdrückt, wobei die Interferenzunterdrückungseinrichtung eine "soft-bit" Entscheidungseinrichtung enthält, welcher als Eingabesignal das der zweiten Sendeeinheit zugeordnete, herausgefilterte Signal zugeführt wird, und deren Ausgabesignal zur Berechnung von in dem der ersten Sendeeinheit zugeordneten, herausgefilterten Signal enthaltenen Interferenzen verwendet wird.

Bei Verwendung einer "soft bit" Entscheidungseinrichtung wird das z.B. im Zahlenbereich zwischen + ∞ und - ∞ liegende herausgefilterte Signal nicht wie bei "hard bit" Entscheidungseinrichtungen genau z. B. entweder auf die Zahl + 1 oder auf die Zahl - 1 abgebildet, sondern auf einen z.B. zwischen den Zahlen + 1 und - 1 liegenden Zahlenbereich. Wie in Simulationen gezeigt wurde, kann durch den Einsatz von "soft bits" die Bitfehlerrate in CDMA-Nachrichtenübertragungssystemen verringert werden. Vorteilhaft werden die von der Entscheidungseinrichtung gelieferten "soft bits" auf Bit- bzw. Symbolebene, d.h. nach dem Despreizen verwendet.

Gemäß einem weiteren Aspekt der vorliegenden Erfindung, welcher insbesondere zur Unterdrückung von "inter symbol interference" geeignet ist, wird eine Empfangseinrichtung für ein CDMA-Nachrichtenübertragungssystem zur Verfügung gestellt, welche einen Rake-Empfänger aufweist, welcher aus von mehreren verschiedenen Sendeeinheiten gemeinsam empfangenen Signalen ein einer bestimmten Sendeeinheit zugeordnetes Signal herausfiltert, und eine adaptive Interferenzunterdrückungseinrichtung, welche in dem herausgefilterten Signal enthaltene Interferenzen unterdrückt, wobei die Interferenzunterdrückungseinrichtung eine "soft-bit" Entscheidungseinrichtung enthält, welcher als Eingabesignal das herausgefilterte Signal zugeführt wird, und deren Ausgabesignal zur Berechnung von in dem herausgefilterten Signal enthaltenen Interferenzen verwendet wird.

Verfahrensmäßig erreicht die Erfindung das oben genannte und weitere Ziele durch die Gegenstände der Ansprüche 8 und 11. Vorteilhafte Weiterbildungen der Erfindung sind in den Unteransprüchen angegeben.

Im folgenden wird die Erfindung anhand eines Ausführungsbeispiels und der beigefügten Zeichnung näher erläutert. In der Zeichnung zeigt:

Figur 1    eine schematische Darstellung eines W-CDMA-Mobilfunkübertragungssystems;

Figur 2    eine schematische Darstellung eines Abschnitts der in Fig. 1 gezeigten Empfangseinheit mit einer Interferenzunterdrückungseinrichtung gemäß der vorliegenden Erfindung; und

Figur 3    eine schematische Darstellung eines Abschnitts der in Fig. 1 gezeigten Empfangseinheit mit mehreren Interferenzunterdrückungseinrichtungen.

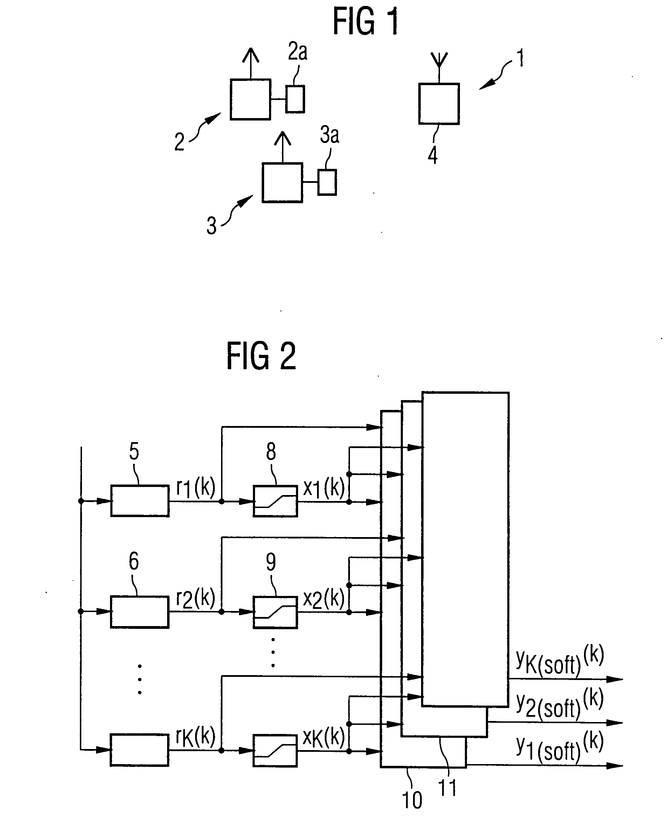

Figur 1 zeigt eine schematische Darstellung eines W-CDMA Mobilfunkübertragungssystems 1. Dieses weist eine erste Sendeeinheit 2, hier: ein erstes Mobilfunkgerät, eine zweite Sendeeinheit 3, hier: ein zweites Mobilfunkgerät, eine Empfangseinheit 4, hier: eine Basisstation, sowie eine Anzahl (K-2) weiterer, hier nicht dargestellter Sendeeinheiten auf.

Ein von einer bestimmten Sendeeinheit 2 zu übertragendes Datenbit d wird zunächst mit Hilfe eines Spreizcodes C, der in einer der Sendeeinheit 2 zugeordneten Speichervorrichtung 2a abgespeichert ist, zu einer Bitfolge aufgespreizt. Die erhaltene Bitfolge wird mit Hilfe eines ebenfalls in der Speichervorrichtung 2a abgespeicherten Pseudo-Zufallscodes S verwürfelt, und die so erhaltene Bitfolge dann zur Empfangseinheit 4 übertragen.

Das in der Empfangseinheit 4 von einer bestimmten Sendeeinheit 2 empfangene Signal e kann somit durch die folgende Gleichung beschrieben werden:

(1) $e = HSCd + noise$

Dabei stellt die Matrix $A = HSC$ die die Spreizung, die Verwürfelung, und die Faltung durch die Übertragung (Übertragungsmatrix H) berücksichtigende, effektive Systemmatrix dar, und d den Vektor der Datensymbole. Aufgrund der periodischzeitvarianten Struktur des Pseudozufallscodes S ändert sich die Systemmatrix A ebenfalls periodisch.

Das von der Empfangseinheit 4 von sämtlichen K Sendeeinheiten 2, 3 insgesamt empfangene Signal genügt somit der folgenden Gleichung:

(2) $e_{All} = \Sigma A_u d_u + noise$

Gemäß Fig. 2 weist die Empfangseinheit 4 für jede der ihr zugeordneten K Sendeeinheiten 2, 3 einen herkömmlichen Rake-Empfänger 5, 6, eine Entscheidungseinrichtung 8, 9, und eine Interferenzunterdrückungseinrichtung 10, 11 auf. Jedem Rake-Empfänger 5, 6 wird das von der Empfangseinheit 4 empfangene Gesamtsignal zugeführt. Der jeweilige Rake-Empfänger 5, 6 führt dann auf herkömmliche Weise eine auf die ihm jeweils zugeordnete Sendeeinheit 2, 3 abgestimmte Filterung des Gesamtsignals durch. Die Ausgabe des u-ten Rake-Empfängers 5, 6 kann dann durch die folgende Gleichung beschrieben werden:

(3) $r_u = \Sigma A^T_u A_{u'} d_{u'} + noise$

Dabei stellt die Matrix $A^T_u$ die Transponierte der für die jeweilige Sendeeinheit 2, 3 geltenden Systemmatrix dar. Die Matrix $B_{uu'} = A^T_u A_{u'}$ beschreibt - für u' ungleich u - die "multi user interference", und - für u' gleich u - die "inter symbol interference". Die Interferenzmatrix $B_{uu'}$ weist ebenfalls eine periodisch-zeitvariante Struktur mit einer Periode von 1 = p/Q auf, wobei p die Periode des Pseudo-Zufallscodes S, und Q der Spreizfaktor des Spreizcodes C ist.

Wie in Fig. 2 gezeigt ist, wird die Ausgabe jedes Rake-Empfängers 5, 6 dann der dem jeweiligen Rake-Empfänger 5, 6 zugeordneten Entscheidungseinrichtung 8, 9, sowie der dem jeweiligen Rake-Empfänger 5, 6 zugeordneten Interferenzunterdrückungseinrichtung 10, 11 zugeführt.

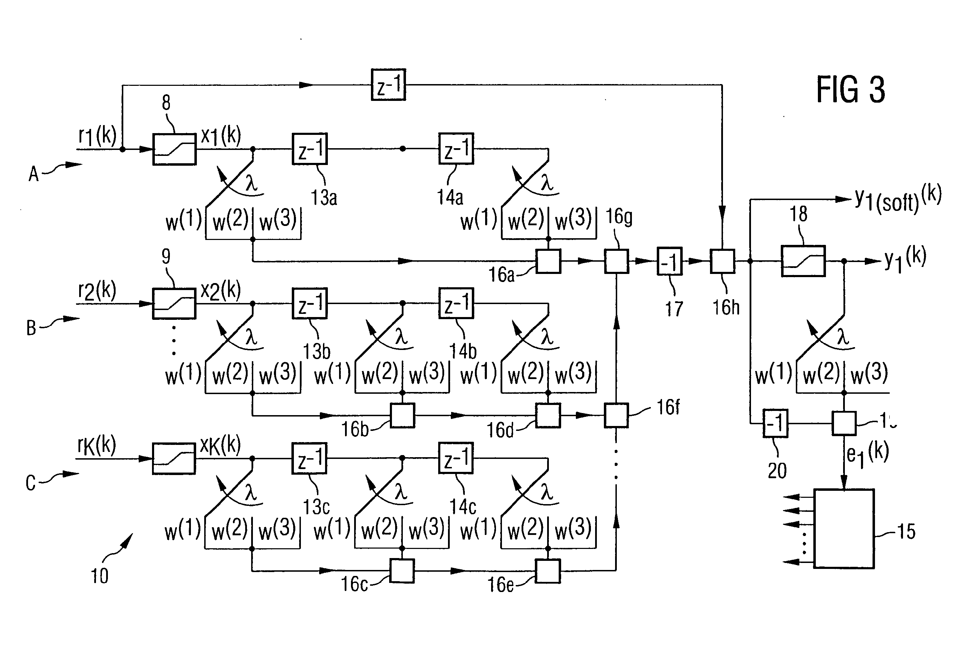

Jede Interferenzunterdrückungseinrichtung 10, 11 weist gemäß Fig. 3 eine Mehrphasenstruktur auf, wobei die Phasenzahl 1 = p/Q beträgt (hier: 3 Phasen $\lambda$ = 1, 2, 3). Die in der jeweiligen Interferenzunterdrückungseinrichtung 10, 11 verwendeten Filterkoeffizienten werden separat für jede Phase $\lambda$ aktualisiert. Beim hier gezeigten Mobilfunkübertragungssystem 1 mit K Sendeeinheiten 2, 3 kann die Struktur der Interferenzunterdrückungseinrichtung 10, 11 durch $K^2 1$ zeitabhängige Filterkoeffizientensatze $w^{(\lambda)}_{u,u'}(k)$ beschrieben werden. Jedoch wird, wie in Fig. 3 gezeigt ist, zum Filtern und zum Aktualisieren der Filterkoeffizienten zu jedem Zeitpunkt k nur ein einzelne Phase verwendet. Aus diesem Grund ist der zum Filtern und zum Aktualisieren erforderliche Rechenaufwand unabhängig von der Phasenzahl 1.

Die Filterkoeffizienten $w^{(\lambda)}_{u,u'}(k)$ werden dadurch berechnet, dass die folgende Minimier-Aufgabe gelöst wird:

(4) $E[|r_u - \Sigma B_{u,u'} d_u|^2] = \min.$

Dabei wird von u'=1 bis u' = K aufsummiert, wobei die Filterkoeffizienten $w^{(\lambda)}_{u,u'}(k)$ Elemente der Matrix $B_{u,u'}$ darstellen. Die Minimier-Aufgabe (4) wird mit Hilfe der Methode der minimalen mittleren Fehlerquadrate ("LMS" = Least Mean Square) gelöst, wobei die Approximation durch einen momentanen Fehler

(5) $e_u(k) = r_u - \Sigma B_{u,u'} d_u$

ersetzt wird, wobei wiederum von u'=1 bis u' = K aufsummiert wird.

Die Gleichung zur Aktualisierung der Koeffizienten für die u-te Sendeeinheit 2, 3 lautet dann

(6) $w^{(\lambda)}_{u,u'} (k+1) = \sigma w^{(\lambda)}_{u,u'}(k) + 2\mu e_u(k)d_u(k)$
wobei u' = 1 ... K ist. Aus Stabilitätsgründen wird im vorliegenden Beispiel $\sigma \approx 0,995$ gewählt.

Zur Approximation für die von den jeweiligen Sendeeinheit 2, 3 gesendeten Datenbits $d_u$ werden bei der erfindungsgemäßen Interferenzunterdrückungseinrichtung 10, 11 statt "hard bits" sog. "soft bits" verwendet. Dabei wird ein bestimmtes, im Zahlenbereich zwischen + ∞ und - ∞ liegendes Signal nicht genau entweder auf die Zahl + 1 oder auf die Zahl - 1 abgebildet, sondern auf einen zwischen den Zahlen + 1 und - 1 liegenden Zahlenbereich. Hierzu wird beim vorliegenden Ausführungsbeispiel die Tangenshyperbolikus-Funktion verwendet. Konkret werden die Werte für $x_u(k)$ gemäß der folgenden Gleichung berechnet:

(7) $x_u(k) = \tanh(r_u(k)/2)$

Auf Grundlage dieser approximierten Werte $x_u(k)$ wird in der jeweiligen Interferenzunterdrückungseinrichtung 10, 11 eine Interferenzunterdrückung entsprechend Gleichung (5) durchgeführt.

Dabei dient der in Fig. 3 gezeigte obere Zweig A der der ersten Sendeeinheit 2 zugeordneten Interferenzunterdrückungseinrichtung 10 zur Unterdrückung der "inter symbol interference", und die übrigen Zweige B, C zur Unterdrückung der "multi user interference".

Zunächst wird in einem ersten Schritt von den den Entscheidungseinrichtungen 8, 9 vom jeweiligen Rake-Empfänger 5, 6 zugeführten Signalen in den Entscheidungseinrichtungen 7, 8 gemäß Gleichung (7) der Tangenshyberbolikus gebildet. Die erhaltenen Signale $x_1(k), x_2(k), ... , x_k(k)$ werden jeweils einem ersten Satz Verzögerungsglieder 13a, 13b, 13c zugeführt, und die verzögerten Signale jeweils einem zweiten Satz Verzögerungsglieder 14a, 14b, 14c. Die Signale $x_1(k), x_2(k), ..., x_k(k)$, die vezögerten Signale, und die zweifach verzögerten Signale werden - abhängig von der jeweils geltenden Phase $\lambda$ - mit dem von einer LMS-Koeffizientenaktualisiereinrichtung 15 gelieferten Filterkoeffizienten $w^{(\lambda)}_{u,u'}(k)$ multipliziert. Sämtliche erhaltene Signale werden in Addiergliedern 16a, b, c, d, e, f, g addiert, und dann das erhaltene Summensignal in einem Multiplizierglied 17 mit dem Faktor -1 multipliziert. Das sich ergebende Signal stellt einen Schätzwert für die insgesamt im von der ersten Sendeeinheit 2 empfangenen Signal enthaltenen Interferenzen dar ("inter symbol interference" und "multi user interference"). Dieses Signal wird in einem Addierglied 16h mit dem von dem der ersten Sendeeinheit 2 zugeordneten Rake-Empfänger 5 gelieferten Signal $r_1(k)$ addiert, und so für $r_1(k)$ ein korrigiertes Signal $y_{1(soft)}$ erzeugt. Zur Erzeugung des an die LMS-Koeffizientenaktualisiereinrichtung 15 gelieferten Fehlersignals $e_1(k)$ wird entsprechend der Gleichung (5) das korrigierte Signal $y_{1(soft)}$ einem Multiplizierglied 20 zugeführt, welches das Signal $y_{1(soft)}$ mit dem Faktor -1 multipliziert, sowie einer entsprechend den o.g. Entscheidungseinrichtungen 7, 8 aufgebauten weiteren Entscheidungseinrichtung 18. Diese bildet entsprechend wie bei der Gleichung (7) vom halbierten Signal $y_{1(soft)}$ den Tangenshyberbolikus. Das erhaltene Signal $y_1(k)$ wird - abhängig von der jeweils geltenden Phase $\lambda$ - mit dem entsprechenden von der LMS-Koeffizientenaktualisiereinrichtung 15 gelieferten Filterkoeffizienten multipliziert, und das Multiplikationssignal in einem Addierglied 19 mit dem vom Multiplizierglied 20 erhaltenen Signal addiert. Das auf diese Weise erhaltene Fehlersignal $e_1(k)$ wird der LMS-Koeffizientenaktualisiereinrichtung 15 zugeführt, die hieraus entsprechend wie oben dargestellt die aktuellen Filterkoeffizienten berechnet.

**Patentansprüche**

1. Empfangseinrichtung (4) für ein CDMA-Nachrichtenübertragungssystem (1), welche einen Rake-Empfänger (5) aufweist, welcher aus von mehreren verschiedenen Sendeeinheiten (2, 3) gemeinsam empfangenen Signalen ein einer bestimmten Sendeeinheit (2) zugeordnetes Signal ($r_1(k)$) herausfiltert, eine adaptive Interferenzunterdrückungseinrichtung (10), welche in dem herausgefilterten Signal ($r_1k$) enthaltene Interferenzen unterdrückt, und eine Koeffizientenaktualisiereinrichtung (15), die Filterkoeffizienten (w) berechnet, die zur Interferenzunterdrückung verwendet werden,
**dadurch gekennzeichnet,**
**dass** die Interferenzunterdrückungseinrichtung (10) eine Mehrphasenstruktur aufweist, wobei die zur Interferenzunterdrückung verwendeten Filterkoeffizienten (w) in Abhhängigkeit von der momentanen Phase ($\lambda$) gewählt werden, in der sich die Interferenzunterdrückungseinrichtung (10) befindet.

2. Empfangseinrichtung (4) für ein CDMA-Nachrichtenübertragungssystem (1), welche einen ersten Rake-Empfänger (5) aufweist, welcher aus von mehreren verschiedenen Sendeeinheiten (2, 3) gemeinsam empfangenen Signalen ein einer ersten Sendeeinheit (2) zugeordnetes Signal ($r_1(k)$) herausfiltert, einen zweiten Rake-Empfänger (6), welcher aus den von den mehreren verschiedenen Sendeeinheiten (2, 3) gemeinsam empfangenen Signalen ein einer zweiten Sendeeinheit (3) zugeordnetes Signal ($r_2(k)$) herausfiltert, und eine adaptive Interferenzunterdrückungseinrichtung (10), welche in dem der ersten Sendeeinheit (2) zugeordneten, herausgefilterten Signal ($r_1(k)$) enthaltene Interferenzen unterdrückt,
**dadurch gekennzeichnet,**
**dass** die Interferenzunterdrückungseinrichtung (10) eine "soft-bit" Entscheidungseinrichtung (9) enthält, welcher als Eingabesignal das der zweiten Sendeeinheit (3) zugeordnete, herausgefilterte Signal ($r_2(k)$) zugeführt wird, und deren Ausgabesignal ($x_2(k)$) zur Berechnung von in dem der ersten Sendeeinheit (2) zugeordneten, herausgefilterten Signal ($r_1k$) enthaltenen Interferenzen verwendet wird.

3. Empfangseinrichtung (4) nach Anspruch 2, bei welcher in der "soft-bit" Entscheidungseinrichtung (9) eine Tangenshyperbolikus-Funktion verwendet wird.

4. Empfangseinrichtung (4) nach Anspruch 3, bei welcher die "soft-bit" Entscheidungseinrichtung (9) ihr Ausgabesignal ($x_2(k)$) unter Verwendung der Formel

$$x_2(k) = \tanh(r_2(k)/2)$$

aus dem herausgefilterten Signal ($r_2(k)$) berechnet.

5. Empfangseinrichtung (4) nach einem der Ansprüche 2 bis 4, welche eine Koeffizientenaktualisiereinrichtung (15) aufweist, die Filterkoeffizienten (w) berechnet, die zur Interferenzunterdrückung verwendet werden, und bei welcher die Interferenzunterdrückungseinrichtung (10) eine Mehrphasenstruktur aufweist, wobei die zur Interferenzunterdrückung verwendeten Filterkoeffizienten (w) in Abhhängigkeit von der momentanen Phase ($\lambda$) gewählt werden, in der sich die Interferenzunterdrückungseinrichtung (10) befindet.

6. Empfangseinrichtung (4) nach Anspruch 5, bei welcher die Koeffizientenaktualisiereinrichtung (15) die Filterkoeffizienten (w) unter Verwendung eines Verfahrens der minimalen mittleren Fehlerquadrate berechnet.

7. Empfangseinrichtung (4) für ein CDMA-Nachrichtenübertragungssystem (1), welche einen Rake-Empfänger (5) aufweist, welcher aus von mehreren verschiedenen Sendeeinheiten (2, 3) gemeinsam empfangenen Signalen ein einer bestimmten Sendeeinheit (2) zugeordnetes Signal ($r_1(k)$) herausfiltert, und eine adaptive Interferenzunterdrückungseinrichtung (10), welche in dem herausgefilterten Signal ($r_1(k)$) enthaltene Interferenzen unterdrückt,
**dadurch gekennzeichnet,**
**dass** die Interferenzunterdrückungseinrichtung (10) eine "soft-bit" Entscheidungseinrichtung (8) enthält, welcher als Eingabesignal das herausgefilterte Signal ($r_1(k)$) zugeführt wird, und deren Ausgabesignal ($x_1(k)$) zur Berechnung von in dem herausgefilterten Signal ($r_1(k)$) enthaltenen Interferenzen verwendet wird.

8. Empfangseinrichtung (4) nach Anspruch 7, welche zusätzlich eines oder mehrere der in den Ansprüchen 1 bis 6 genannten Merkmale aufweist.

9. Adaptives CDMA-Interferenzunterdrückungsverfahren, wobei aus von mehreren verschiedenen Sendeeinheiten (2, 3) gemeinsam empfangenen Signalen ein einer bestimmten Sendeeinheit (2) zugeordnetes Signal ($r_1(k)$) herausgefiltert wird, und wobei in dem herausgefilterten Signal ($r_1(k)$) enthaltene Interferenzen auf adaptive Weise unterdrückt werden,
**dadurch gekennzeichnet,**
**dass** das Verfahren die Schritte aufweist:

- Zuführen des herausgefilterten Signals ($r_1(k)$) an eine "soft-bit" Entscheidungseinrichtung (8);

und

- Verwenden eines von der "soft-bit" Entscheidungseinrichtung (8) gelieferten Ausgabesignals ($x_1(k)$) zur Berechnung von in dem herausgefilterten Signal ($r_1(k)$) enthaltenen Interferenzen.

10. Adaptives CDMA-Interferenzunterdrückungsverfahren nach Anspruch 9, wobei in der "soft-bit" Entscheidungseinrichtung (8) eine Tangenshyperbolikus-Funktion verwendet wird.

11. Adaptives CDMA-Interferenzunterdrückungsverfahren nach Anspruch 10, wobei die "soft-bit" Entscheidungseinrichtung (8) ihr Ausgabesignal ($x_1(k)$) unter Verwendung der Formel

$$x_1(k) = \tanh(r_1(k)/2)$$

aus dem herausgefilterten Signal ($r_1(k)$) berechnet.

12. Adaptives CDMA-Interferenzunterdrückungsverfahren, wobei aus von mehreren verschiedenen Sendeeinheiten (2, 3) gemeinsam empfangenen Signalen ein einer ersten Sendeeinheit (2) zugeordnetes Signal ($r_1(k)$), und ein einer zweiten Sendeeinheit (3) zugeordnetes Signal ($r_2(k)$) herausgefiltert wird, und wobei in dem der ersten Sendeeinheit (2) zugeordneten, herausgefilterten Signal ($r_1k$) enthaltene Interferenzen auf adaptive Weise unterdrückt werden,

      **dadurch gekennzeichnet,**

**dass** das Verfahren die Schritte aufweist:

- Zuführen des der zweiten Sendeeinheit (3) zugeordneten, herausgefilterten Signals ($r_2(k)$) an eine "soft-bit" Entscheidungseinrichtung (9); und
- Verwenden eines von der "soft-bit" Entscheidungseinrichtung (9) gelieferten Ausgabesignals ($x_2(k)$) zur Berechnung von in dem herausgefilterten Signal ($r_2(k)$) enthaltenen Interferenzen.

13. Adaptives CDMA-Interferenzunterdrückungsverfahren nach Anspruch 12, welches zusätzlich einen oder mehrere der in den Ansprüchen 9 bis 11 genannten Verfahrensschritte aufweist.

# FIG 1

# FIG 2

$r_1(k)$    $x_1(k)$

$r_2(k)$    $x_2(k)$

$r_K(k)$    $x_K(k)$

$y_{K(soft)}(k)$

$y_{2(soft)}(k)$

$y_{1(soft)}(k)$

FIG 3

EP 1 259 005 A1

## EUROPÄISCHER RECHERCHENBERICHT

**Europäisches Patentamt**

**Nummer der Anmeldung**

EP 01 11 2282

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 893 888 A (TOKYO SHIBAURA ELECTRIC CO) 27. Januar 1999 (1999-01-27) | 1 | H04B1/707 |
| A | * Seite 5, Zeile 7 – Zeile 12; Ansprüche 1,10; Abbildungen 2,4 * | 2-13 | |
| A | FR 2 797 726 A (SAGEM) 23. Februar 2001 (2001-02-23) * das ganze Dokument * | 1 | |
| A | US 5 305 349 A (DENT PAUL W) 19. April 1994 (1994-04-19) * Spalte 13, Zeile 64 – Spalte 15, Zeile 20 * | 2-13 | |
| A | DE 198 15 825 A (HAGENAUER JOACHIM) 14. Oktober 1999 (1999-10-14) * Zusammenfassung; Anspruch 1 * * Seite 3, Zeile 30 – Zeile 44 * | 2-13 | |

**RECHERCHIERTE SACHGEBIETE (Int.Cl.7)**

H04B
H04J

Der vorliegende Recherchenbericht wurde für alle Patentansprüche erstellt

| Recherchenort | Abschlußdatum der Recherche | Prüfer |
|---|---|---|
| MÜNCHEN | 19. Februar 2002 | Bauer, F |

**Europäisches**

**Patentamt**

Nummer der Anmeldung

EP 01 11 2282

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**Europäisches**
**Patentamt**

**MANGELNDE EINHEITLICHKEIT**
**DER ERFINDUNG**
**ERGÄNZUNGSBLATT B**

Nummer der Anmeldung

EP 01 11 2282

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Anspruch : 1

   Empfangsinrichtung für ein
   CDMA-Nachrichtenübertragungssystem mit einem Rake Empfänger
   und eine adaptive Interferenzunterdrückungseinrichtung, die
   eine Mehrphasenstruktur aufweist.

2. Ansprüche: 2-13

   Empfangsinrichtung für ein
   CDMA-Nachrichtenübertragungssystem mit einem Rake Empfänger
   und eine adaptive Interferenzunterdrückungseinrichtung, die
   eine "soft-bit" Entscheidungseinrichtung enthält.

## ANHANG ZUM EUROPÄISCHEN RECHERCHENBERICHT
## ÜBER DIE EUROPÄISCHE PATENTANMELDUNG NR.

EP 01 11 2282

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-02-2002

| Im Recherchenbericht angeführtes Patentdokument | | Datum der Veröffentlichung | Mitglied(er) der Patentfamilie | | Datum der Veröffentlichung |
|---|---|---|---|---|---|
| EP 0893888 | A | 27-01-1999 | JP | 11046158 A | 16-02-1999 |
| | | | CN | 1213912 A | 14-04-1999 |
| | | | EP | 0893888 A2 | 27-01-1999 |
| | | | US | 6192066 B1 | 20-02-2001 |
| FR 2797726 | A | 23-02-2001 | FR | 2797726 A1 | 23-02-2001 |
| US 5305349 | A | 19-04-1994 | AU | 675330 B2 | 30-01-1997 |
| | | | AU | 6905594 A | 21-11-1994 |
| | | | BR | 9405325 A | 31-08-1999 |
| | | | CA | 2139238 A1 | 10-11-1994 |
| | | | CN | 1108869 A | 20-09-1995 |
| | | | EP | 0622909 A2 | 02-11-1994 |
| | | | FI | 946138 A | 28-12-1994 |
| | | | JP | 7508393 T | 14-09-1995 |
| | | | NZ | 266930 A | 28-10-1996 |
| | | | WO | 9426051 A1 | 10-11-1994 |
| DE 19815825 | A | 14-10-1999 | DE | 19725275 A1 | 24-12-1998 |
| | | | DE | 19815825 A1 | 14-10-1999 |

EPO FORM P0461

Für nähere Einzelheiten zu diesem Anhang : siehe Amtsblatt des Europäischen Patentamts, Nr.12/82